# EUROPÄISCHE PATENTSCHRIFT

(11) **EP 0 924 277 B1**
(45) Veröffentlichungstag und Bekanntmachung des Hinweises auf die Patenterteilung: **19.03.2003**
(21) Anmeldenummer: 98122966.9
(22) Anmeldetag: 03.12.1998
(51) Int. Cl.: C09J 5/00

(54) **Zerstörungs- und rückstandsfrei wiederlösbares Befestigungssystem für innen und aussen**
Indestructable and residue-free detachable mounting device for interior and exterior
Système de fixation détachable, sans résidu adhésif, non destructif, utilisable à l'intérieur et à l'extérieur

(30) Priorität: 17.12.1997 DE 19756084
(43) Veröffentlichungstag der Anmeldung: 23.06.1999
(73) Patentinhaber: Tesa AG, 20253 Hamburg (DE)
(72) Erfinder: Zimmermann, Dieter, 21655 Jork (DE); Kehler, Harald Dr., 21109 Hamburg (DE)

(56) Entgegenhaltungen:
- US-A- 4 778 845
- US-A- 5 626 932
- SIKATRACK-PANEL-SYSTEM System-Merkblatt, Ausgabe Januar 1995 Sika Chemie GmbH, Bad Urach (D) XP002097255
- PATENT ABSTRACTS OF JAPAN vol. 015, no. 317 (C-0858), 13. August 1991 & JP 03 121174 A (NITTO DENKO CORP), 23. Mai 1991

## Beschreibung

Die Erfindung betrifft ein Befestigungssystem für eine hochfeste und dennoch elastische sowie zerstörungsfrei und rückstandsfrei wieder lösbare Verklebung zweier Substrate, sowie ihre Verwendung.

Um z.B. im Bad (auf Kacheln) kleine Schränke (usw.) oder außen einen Briefkasten (auf Holz oder Mauerwerk) zu befestigen, sind im Moment Bohrer, Dübel, Schrauben usw. erforderlich.

Eine zerstörungs- und rückstandsfreie, wiederlösbare und wetterfeste Befestigungsart ist zur Zeit nicht im Handel.

Es gibt zwar das Sika®-System: Sikaband mit dem (doppelseitig klebenden) Montageband speziell für Paneelenverklebung. Beim Ablösen spaltet jedoch das Montageband in seinen Schaum und somit ist ein rückstandsfreies Trennen nicht möglich und auch nicht vorgesehen.

Es sind auch Klebfolien für wiederlösbare Verklebungen bekannt. So beschreibt die **DE 33 31 016 A1** eine Klebfolie für wiederlösbare Klebbindungen, die es gestattet, daß eine damit hergestellte Klebbindung durch Ziehen an der Klebfolie in Richtung der Verklebungsebene lösbar ist. Mit solchen Klebfolien lassen sich hohe Klebkräfte und Scherfestigkeiten erzielen und Klebverbunde ohne weitere Hilfsmittel wieder lösen, vergleichbar dem Öffnen eines Weckglases, ähnlich wie dort die Gummidichtung am Anfasser aus der Dichtungsfuge gezogen wird.

Ferner beschreibt die **DE 37 14 453 C1** einen zerstörungsfrei von Übungsobjekten wieder abnehmbaren Übungssprengkörper, der mit solch einer Klebfolie reversibel befestigt wird.

Auch die **WO 92/11333** beschreibt unter anderem Klebfolien für entsprechende Anwendungen, wobei die eingesetzten Klebfolien eine geringe Elastizität bei gleichzeitig hoher Dehnung aufweisen.

Die **DE 42 22 849 C1** beschreibt ebenfalls einen Streifen einer Klebfolie dieser Art mit einem besonders ausgestalteten Anfasser.

Weitere solche Klebfolien sind in **WO95/06691, DE 44 28 587 A1, DE 44 31 914 A1, WO 97/07172** und **DE 195 31 696 A1** beschrieben sowie als tesa Power Strips® im Handel.

Nachteilig dabei sind jedoch der erforderliche Anfasser, um an diesem ziehend den Verbund wieder zu trennen, sowie unzureichende Festigkeiten und Beständigkeiten.

Aufgabe der Erfindung war es, hier Abhilfe zu schaffen, insbesondere ein Befestigungssystem zu schaffen, das hohen Anforderungen genügt und zugleich eine ausreichende Elastizität aufweist, zudem aber auch ohne optische Störung so ausgebildet ist, daß eine beschädigungslose und rückstandsfreie Trennung der Substrate wieder möglich ist.

Gelöst wird diese Aufgabe durch ein Befestigungssystem, wie dies im einzelnen näher in den Ansprüchen gekennzeichnet ist.

Damit lassen sich hochfeste Verbunde erzielen, bei denen die Streifen der Klebfolie nach Vernetzen der Kleb- oder Dichtmasse entfernt werden können, um den optischen Eindruck des Verbundes nicht zu stören, wonach der Verbund hochfest verklebt bleibt und dann bei Bedarf getrennt werden kann durch Abhebeln und/oder Abdrehen oder dergleichen.

Damit wurde gefunden, daß die Kombination von tesa Power- oder Poster-Strips insbesondere mit einer feuchtigkeitsvernetzenden Polyurethan-Kleb- oder Dichtmasse (EKF-PU) das gewünschte Anforderungsprofil außerordentlich gut erfüllt, und dies insbesondere auch ohne Primer. Hierin sorgen die Strips für die erforderliche Anfangshaftung und dienen gleichzeitig als Abstandshalter, und somit kommt die Luftfeuchtigkeit seitlich an das EKF-Produkt. Nach etwa 24 h hat das EKF-Produkt soviel Anfangshaftung, daß die Strips entfernt werden können. Dann sind auch keine Anfasser mehr sichtbar.

Geeignete Klebfolie-Streifen sind insbesondere die im Handel erhältlichen tesa Power Strips, aber auch solche gemäß WO 92/111333, WO 95/06691, DE 44 28 587, DE 44 31 914, WO 97/07172 und DE 195 31 696.

Geeignete Kleb- oder Dichtmassen sind insbesondere reaktive Polyurethane, vor allem ein elastischer, hochviskoser 1-K-PUR-Klebstoff, wie er als Sika Tack® Paneel und als Sika Flex® 252 im Handel erhältlich ist, insbesondere für das Verkleben von Fassadenplatten im Außen- und Innenbereich.

Ein solches reaktives Polyurethan (ohne Primer), speziell abgefüllt im Siegelrandbeutel oder in der Tube, ergibt nach 24 h einen sicheren witterungsbeständigen, alterungsstabilen, lösbaren Verbund im Innen- und Außenbereich.

### Beispiel:

1 Briefkasten - 2 kg schwer
Ausrüsten mit 4 Power Strips (Dicke 650 µm)
Verklebungsfläche: 745 mm² (ca. 20 x 37,25 mm)
Dicke: 650 ± 100 µm
Haltekraft: ca. 4 kg

Ca. 5 g EKF-PU (Sika Flex® 252), ergeben, bedingt durch die Power Strip-Abstandshalterwirkung, eine Verklebungsebene von ca. 28 cm², ausreichend für eine optimale Haltefestigkeit nach der Aushärtung.

Die Adhäsionstrennung, z.B. durch Drehen oder Abhebeln des Briefkastens, erfolgt meistens von der glatten Briefkastenrückwand. Von dem z.B. porösen Mauerwerk (Ziegel oder Klinker) kann man durch den Stripeffekt das Befestigungsmittel problemlos rückstands- oder zerstörungslos wieder entfernen.

## Patentansprüche

1. Befestigungssystem für eine hochfeste und dennoch elastische und zerstörungs- und rückstandsfrei wieder lösbare Verklebung zweier Substrate, bei dem
a) das erste Substrat mittels Streifen von auf Zug in Richtung der Verklebungsebene entklebender Klebfolie an das zweite Substrat geklebt ist, wobei
b) die Streifen zugleich als Abstandshalter zwischen den zwei Substraten dienen,
c) die zwei Substrate zusätzlich mit einer vemetzenden, elastischen Kleboder Dichtmasse verklebt sind, und
d) zum Lösen der Verklebung zunächst die Streifen zwischen den zwei Substraten herausziehbar sind, und
e) das erste vom zweiten Substrat abhebelbar und/oder abdrehbar ist und
f) Reste der Kleb- oder Dichtmasse von den Substraten abziehbar sind.

2. Befestigungssystem nach Anspruch 1, **dadurch gekennzeichnet, daß** die Streifen Anfasser aufweisen, die über die Substrate anfaßbar herausragen.

3. Befestigungssystem nach Anspruch 1, **dadurch gekennzeichnet, daß** beide Substrate fest und starr sind, wobei insbesondere eines der Substrate aus Mauerwerk, Kacheln, Holz oder dergleichen besteht.

4. Befestigungssystem nach Anspruch 1, **dadurch gekennzeichnet, daß** die Klebfolie mit oder ohne Zwischenträger elastisch oder plastisch dehnbar ist.

5. Befestigungssystem nach Anspruch 1, **dadurch gekennzeichnet, daß** die Adhäsion der Klebfolie geringer als die Kohäsion ist, das Haftvermögen beim Dehnen der Folie weitgehend verschwindet, und das Verhältnis von Abzugskraft zu Reißlast mindestens 1 : 1,5 ist.

6. Befestigungssystem nach Anspruch 1, **dadurch gekennzeichnet, daß** die Klebfolie eine solche auf Basis von thermoplastischem Kautschuk und klebrigmachenden Harzen ist, mit hoher Elastizität und geringer Plastizität.

7. Befestigungssystem nach Anspruch 1, **dadurch gekennzeichnet, daß** die Klebfolie 200 - 1000, insbesondere 300- 700 mm dick ist.

8. Befestigungssystem nach Anspruch 1, **dadurch gekennzeichnet, daß** die Kleb- oder Dichtmasse ein Feuchtigkeitsvernetzender Ein-Komponenten-Kleber, insbesondere ein solcher Polyurethan-Kleber ist.

9. Verwendung eines Befestigungssystems nach einem der Ansprüche 1 - 8 zum zerstörungs- und rückstandsfrei wieder lösbaren Verkleben zweier Substrate.

## Claims

1. Fixing system for a high-strength adhesive bond between two substrates which is nevertheless elastic and can be parted again without destruction or residue, wherein
a) the first substrate is bonded to the second substrate by means of strips of adhesive sheet which deadhere on pulling in the direction of the bond plane, where
b) the strips serve at the same time as spacers between the two substrates,
c) the two substrates are additionally bonded with a crosslinking, elastic adhesive or sealant, and
d) for the parting of the bond first of all the strips can be pulled out between the two substrates, and
e) the first substrate can be detached from the second by leverage and/or rotation, and
f) residues of the adhesive or sealant can be removed from the substrates.

2. Fixing system according to Claim 1, **characterized in that** the strips have grip tabs which protrude grippably beyond the substrates.

3. Fixing system according to Claim 1, **characterized in that** both substrates are solid and rigid, one of the substrates in particular being composed of masonry, tiles, wood or the like.

4. Fixing system according to Claim 1, **characterized in that** the adhesive sheet with or without intermediate support is elastically or plastically extensible.

5. Fixing system according to Claim 1, **characterized in that** the adhesion of the adhesive sheet is lower than the cohesion, the adhesion largely disappears when the film is extended, and the ratio of peel force to tear load is at least 1:1.5.

6. Fixing system according to Claim 1, **characterized in that** the adhesive sheet is one based on thermoplastic rubber and tackifying resins, with high elasticity and low plasticity.

7. Fixing system according to Claim 1, **characterized in that** the adhesive sheet is 200-1000, especially 300-700 mm thick.

8. Fixing system according to Claim 1, **characterized in that** the adhesive or sealant is a moisture-crosslinking one-component adhesive, in particular a polyurethane adhesive of this kind.

9. Use of a fixing system according to one of Claims 1-8 for the nondestructively and residuelessly repartable adhesive bonding of two substrates.

## Revendications

1. Système de fixation pour un collage à haute résistance et néanmoins élastique, ainsi que détachable sans destruction et sans résidus, de deux substrats, dans lequel
a) le premier substrat est collé au second substrat au moyen de rubans de film adhésif se décollant par traction dans la direction du plan de collage,
b) les rubans servant en même temps d'éléments d'écartement entre les deux substrats,
c) les deux substrats sont en plus collés avec une masse de collage ou d'étanchéité élastique réticulante, et
d) pour détacher le collage, les rubans entre les deux substrats peuvent d'abord être retirés, et
e) le premier substrat peut être détaché du second par soulèvement et/ou rotation, et
f) les résidus de la masse de collage ou d'étanchéité peuvent être enlevés des substrats.

2. Système de fixation suivant la revendication 1, **caractérisé en ce que** les rubans présentent des onglets, qui peuvent être saisis en saillie sur les substrats.

3. Système de fixation suivant la revendication 1, **caractérisé en ce que** les deux substrats sont solides et rigides, un des substrats en particulier étant constitué de maçonnerie, de carrelage, de bois ou analogue.

4. Système de fixation suivant la revendication 1, **caractérisé en ce que** le film adhésif avec ou sans support intermédiaire peut être allongé de façon élastique ou plastique.

5. Système de fixation suivant la revendication 1, **caractérisé en ce que** l'adhésion du film adhésif est inférieure à sa cohésion, le pouvoir adhésif disparaît largement lors de l'allongement du film, et le rapport de la force d'adhérence à la charge d'arrachement vaut au moins 1 : 1,5.

6. Système de fixation suivant la revendication 1, **caractérisé en ce que** le film adhésif est un film à base de caoutchouc thermoplastique et de résines conférant un état collant, avec une haute élasticité et une faible plasticité.

7. Système de fixation suivant la revendication 1, **caractérisé en ce que** le film adhésif a une épaisseur de 200 - 1000, en particulier de 300 - 700 µm.

8. Système de fixation suivant la revendication 1, **caractérisé en ce que** la masse de collage ou d'étanchéité est une colle à un composant, à réticulation par l'humidité, en particulier une colle polyuréthanne.

9. Utilisation d'un système de fixation suivant l'une quelconque des revendications 1 à 8, pour le collage détachable, sans destruction et sans résidus, de deux substrats.
